# EUROPÄISCHE PATENTSCHRIFT

(11) **EP 3 452 261 B1**
(45) Veröffentlichungstag und Bekanntmachung des Hinweises auf die Patenterteilung: **04.11.2020**
(21) Anmeldenummer: 17706975.4
(22) Anmeldetag: 20.02.2017
(51) Int. Cl.: B29C 45/14, B29C 39/10, B29C 33/12

(54) **VERFAHREN UND VORRICHTUNG ZUM HINTERSPRITZEN EINES GEBOGENEN GLASKÖRPERS**
METHOD AND DEVICE FOR BACK-MOLDING A CURVED GLASS BODY
PROCÉDÉ DISPOSITIF POUR LE SURMOULAGE D'UN CORPS CINTRÉ EN VERRE

(30) Priorität: 03.05.2016 DE 102016207605
(43) Veröffentlichungstag der Anmeldung: 13.03.2019
(73) Patentinhaber: Volkswagen Aktiengesellschaft, 38440 Wolfsburg (DE)
(72) Erfinder: KOHLITZ, Stephan, 38442 Wolfsburg (DE); DEWALD, Wilma, 38106 Braunschweig (DE); SCHÜTZ, Christine, 38108 Braunschweig (DE)
(86) Internationale Anmeldenummer: PCT/EP2017/053733
(87) Internationale Veröffentlichungsnummer: WO 2017/190860

(56) Entgegenhaltungen:
- WO-A1-2014/067495
- JP-A- H04 197 613
- US-A1- 2015 189 769

## Beschreibung

Die Erfindung betrifft ein Verfahren zum Hinterspritzen eines gebogenen Glaskörpers, bei welchem in einem Werkzeug ein Formeinleger mit einer ersten, eben ausgebildeten Seitenfläche und einer gegenüberliegenden zweiten, an eine Kontur des gebogenen Glaskörpers angepassten Seitenfläche derart positioniert wird, dass der Formeinleger mit seiner ersten, eben ausgebildeten Seitenfläche an einer Innenfläche des Werkzeugs anliegt und mit seiner zweiten, an die Kontur des gebogenen Glaskörpers angepassten Seitenfläche frei liegt, wobei der gebogene Glaskörper auf die zweite, an die Kontur des gebogenen Glaskörpers angepasste Seitenfläche aufgelegt wird und der aufgelegte gebogene Glaskörper mit einem fließfähigen Medium hinterspritzt wird. Ferner betrifft die Erfindung eine Vorrichtung zum Hinterspritzen eines gebogenen Glaskörpers, welche ein Werkzeug und einen Formeinleger, welcher in dem Werkzeug positioniert ist, aufweist, wobei der Formeinleger eine erste, eben ausgebildete Seitenfläche aufweist, mittels welcher der Formeinleger an einer Innenfläche des Werkzeugs anliegt, und wobei der Formeinleger eine der ersten Seitenfläche gegenüberliegende zweite Seitenfläche aufweist, welche an die Kontur des gebogenen Glaskörpers angepasst ist, wobei zum Hinterspritzen des gebogenen Glaskörpers mit einem fließfähigen Medium der gebogene Glaskörper auf die zweite Seitenfläche des Formeinlegers auflegbar ist..

Ein derartiges Verfahren und eine derartige Vorrichtung sind aus der JP H04 197613 A bekannt.

Für viele Anwendungen, insbesondere auch Anwendungen im Fahrzeugbau, ist es erforderlich, einen gebogenen Glaskörper, insbesondere einen 3-dimensional geformten Glaskörper, welcher eine oder mehrere Biegungen aufweist, mit einem Material, insbesondere einem Kunststoffmaterial zu beschichten. Um zu vermeiden, dass der gebogene Glaskörper beim Beschichten reißt oder sogar zerbricht, wird der gebogene Glaskörper üblicherweise durch ein Laminier- und/oder Klebeverfahren mit einem Material beschichtet. Diese Verfahren sind jedoch sehr zeitintensiv und erfordern eine sehr hohe Genauigkeit, um eine gute Haltbarkeit der Beschichtung auf dem gebogenen Glaskörper erreichen zu können.

Eine Alternative zu einem Laminier- und/oder Klebeverfahren, um einen gebogenen Glaskörper mit einem Material zu beschichten, ist ein Hinterspritzen des gebogenen Glaskörpers. Das Hinterspritzen eines gebogenen Glaskörpers stellt jedoch eine große Herausforderung dar, da die Umformung des Glaskörpers in die gebogene, 3-dimensionale Form teilweise hohe Maßtoleranzen und Formabweichungen zur Folge hat, welche mit dem zum Hinterspritzen zu verwendenden Werkzeug ausgeglichen werden müssen. Das Werkzeug, in welchem ein Hinterspritzen erfolgen kann, ist üblicherweise aus einem Stahlwerkstoff gefräst. Der für das Hinterspritzen notwendige Druck von einigen hundert bar führt zu einer punktuellen Biegebelastung des in das Werkzeug eingelegten Glaskörpers, wenn dieser nicht exakt an der Innenfläche des Werkzeugs anliegt. Kleine Freiräume zwischen der Innenfläche der Werkzeugs und des gebogenen Glaskörpers können so zu einem Glasbruch beim Hinterspritzen führen. Da es bei gebogenen Glaskörpern unvermeidlich Maßabweichungen gibt, die vom Glas-Umformprozess und insbesondere von der zur Glasumformung genutzten Form abhängen, muss für jedes Glas-Umformwerkzeug eine eigene Form zum Hinterspritzen für die mit dem spezifischen Glas-Umformwerkzeug gefertigten Glaskörper erstellt werden, oder - je nach Toleranzen bei der Glasbiegung - sogar für jeden Glaskörper individuell. Die Hinterspritzform ist individuell an die Kontur des gebogenen Glaskörpers mit einer sehr hohen Genauigkeit anzupassen. Dies ist sehr aufwendig und erfordert hohe Kosten und viel Zeit.

Der Erfindung liegt daher die Aufgabe zugrunde, ein Verfahren und eine Vorrichtung zum Hinterspritzen eines gebogenen Glaskörpers zur Verfügung zu stellen, mittels welcher das Hinterspritzen eines gebogenen Glaskörpers vereinfacht werden kann und ein Bruch des Glaskörpers beim Hinterspritzen vermieden werden kann.

Die Lösung der erfindungsgemäßen Aufgabe erfolgt mit den Merkmalen der unabhängigen Ansprüche. Bevorzugte Ausgestaltungen und Weiterbildungen der Erfindung sind in den abhängigen Ansprüchen angegeben.

Das Verfahren gemäß der Erfindung zeichnet sich dadurch aus, dass zur Abformung der Kontur des gebogenen Glaskörpers der gebogene Glaskörper in dem Werkzeug positioniert wird und der Formeinleger anschließend anhand der Kontur des gebogenen Glaskörpers innerhalb des Werkzeuges ausgeformt wird.

Die Vorrichtung gemäß der Erfindung zeichnet sich dadurch aus, dass zur Abformung der Kontur des gebogenen Glaskörpers der gebogene Glaskörper in dem Werkzeug positioniert ist und der Formeinleger anhand der Kontur des gebogenen Glaskörpers innerhalb des Werkzeuges ausgeformt ist.

Gemäß dem erfindungsgemäßen Verfahren und der erfindungsgemäßen Vorrichtung wird vor dem Einlegen des zu hinterspritzenden Glaskörpers in das Werkzeug zunächst ein Formeinleger in das Werkzeug eingelegt, auf welchem der zu hinterspritzende Glaskörper positioniert wird, um hinterspritzt zu werden. Der Glaskörper wird damit nicht mehr unmittelbar auf der Innenfläche des Werkzeugs positioniert, sondern liegt auf dem Formeinleger auf. Der Formeinleger zeichnet sich dadurch aus, dass er zwei verschiedene Seitenflächen aufweist. Die erste Seitenfläche ist eben ausgebildet, so dass der Formeinleger flächig auf der Innenfläche des Werkzeugs aufliegen kann. Ein Verrutschen oder Verkippen des Formeinlegers innerhalb des Werkzeugs kann dadurch vermieden werden. Die zweite Seitenfläche des Formeinlegers, welche der ersten Seitenfläche gegenüberliegt, ist hingegen nicht eben ausgebildet, sondern weist eine unebene Kontur auf. Diese unebene Kontur ist an die Kontur des gebogenen Glaskörpers so angepasst, dass der zu hinterspritzende, gebogene Glaskörper passgenau auf die zweite, uneben ausgebildete Seitenfläche des Formeinlegers aufgelegt werden kann, so dass eine Entstehung eines Freiraums zwischen dem Formeinleger und dem gebogenen Glaskörper vermieden werden kann. Mittels des Formeinlegers können Toleranzabweichungen des gebogenen Glaskörpers ausgeglichen werden, so dass eine Beschädigung oder sogar ein Bruch des gebogenen Glaskörpers beim Hinterspritzen vermieden werden kann. Gleichzeitig ist der Formeinleger vorzugsweise derart stabil ausgebildet, dass er sich bei den beim Hinterspritzen auftretenden hohen Drücken nicht nennenswert verformen kann. Ferner weist die Oberfläche, insbesondere die Oberfläche der zweiten Seitenfläche des Formeinlegers Antihaft-Eigenschaften auf, so dass verhindert werden kann, dass der gebogene Glaskörper an dem Formeinleger anhaftet. Der gebogene Glaskörper kann dadurch auch nach dem Hinterspritzen leicht von dem Formeinleger gelöst werden. Dadurch, dass nunmehr ein zusätzlich in das Werkzeug einzulegender Formeinleger verwendet wird, auf welchem der gebogene Glaskörper beim Hinterspritzen aufliegt, muss das eigentliche Werkzeug zum Hinterspritzen nicht mehr an die Kontur des Glaskörpers angepasst werden, so dass das Hinterspritzen eines gebogenen Glaskörpers wesentlich einfacher, schneller und mit geringeren Kosten erfolgen kann. Der Formeinleger kann individuell an den zu hinterspritzenden gebogenen Glaskörper angepasst werden und leicht in das Werkzeug eingesetzt und auch wieder entfernt werden, so dass in einem Werkzeug unterschiedliche Formen von gebogenen Glaskörpern hinterspritzt werden können, ohne dass das Werkzeug selber geändert bzw. aufwendig bearbeitet werden muss. Der Formeinleger ist vorzugsweise aus einem Kunststoffmaterial hergestellt. Der Formeinleger kann aber auch aus anderen, härteren Materialien hergestellt sein, wie beispielsweise Beton. Der Formeinleger kann zudem den in das Werkzeug eingelegten Glaskörper vor einem Zerkratzen schützen. Ein und derselbe Formeinleger kann zum Hinterspritzen einer Vielzahl von zu hinterspritzenden Glaskörpern, insbesondere Glaskörpern einer Charge, bei welcher Maßabweichungen relativ gering sind, genutzt werden.

Der Formeinleger wird durch eine Abformung der Kontur des gebogenen Glaskörpers hergestellt. Der Formeinleger kann dadurch individuell an die Form des zu hinterspritzenden gebogenen Glaskörpers angepasst werden. Die Abformung der Kontur des gebogenen Glaskörpers erfolgt vorzugsweise nur an einer Seitenfläche des Formeinlegers und zwar an der zweiten Seitenfläche des Formeinlegers, auf welcher der Glaskörper beim Hinterspritzen positioniert bzw. aufgelegt wird. Durch die unmittelbare Abformung der Kontur des gebogenen Glaskörpers kann eine besonders hohe Genauigkeit bei der Anpassung der Kontur des Formeinlegers an die Kontur des gebogenen Glaskörpers erreicht werden.

Zur Abformung der Kontur des gebogenen Glaskörpers ist es vorgesehen, dass der gebogene Glaskörper in dem Werkzeug positioniert wird und der Formeinleger anschließend anhand der Kontur des gebogenen Glaskörpers innerhalb des Werkzeugs ausgeformt wird. Die Abformung der Kontur des gebogenen Glaskörpers und damit die Herstellung des Formeinlegers erfolgt in einem zusätzlichen Verfahrensschritt vor dem eigentlichen Hinterspritzen des Glaskörpers. Für die Abformung wird der zu hinterspritzende Glaskörper zunächst in dem Werkzeug positioniert, und anschließend wird der Formeinleger anhand der Kontur des gebogenen Glaskörpers innerhalb des Werkzeugs geformt bzw. ausgeformt. Der Formeinleger kann damit individuell an den gebogenen Glaskörper angepasst hergestellt werden, indem der Glaskörper selber zunächst als eine Art Formvorlage für den Formeinleger fungiert.

Das Ausformen des Formeinlegers kann beispielsweise mittels eines thermischen Umformprozesses erfolgen. Mittels eines thermischen Umformprozesses kann mit einer hohen Genauigkeit, mit wenig Aufwand und in kurzer Zeit der Formeinleger geformt werden. Der thermische Umformprozess kann beispielsweise durch ein Spritzgießen, ein Spritzprägen oder ein Prägen erfolgen. Der Formeinleger ist bei einem thermischen Umformprozess vorzugsweise aus einem Kunststoffmaterial, insbesondere einem thermoplastischen Kunststoffmaterial, ausgebildet, so dass der Formeinleger leicht formbar ist. Das Kunststoffmaterial kann beispielsweise schaumartige Eigenschaften oder aber auch elastomere Eigenschaften aufweisen. Beispielsweise kann das Kunststoffmaterial ein thermoplastisches Polyurethan (TPU), ein thermoplastisches Elastomer (TPE) oder ein Silikon (LSR = Liquid Silicon Rubber) sein. Weiter kann das Kunststoffmaterial ein Harz, beispielsweise ein Acrylharz oder Epoxydharz, sein. Bevorzugt werden Kunststoffmaterialien mit geringerer Schwindung eingesetzt.

Der thermische Umformprozess kann derart erfolgen, dass der gebogene Glaskörper in dem Werkzeug beabstandet zu der Innenfläche des Werkzeuges positioniert wird, so dass ein Freiraum zwischen der Innenfläche des Werkzeugs und des gebogenen Glaskörpers ausgebildet wird, wobei in den Freiraum eine fließfähige Formmasse eingebracht wird und die in den Freiraum eingebrachte Formmasse ausgehärtet wird, wodurch der Formeinleger ausgebildet wird. Zur Ausbildung des Formeinlegers wird hierbei zunächst der gebogene Glaskörper innerhalb des Werkzeugs in einem definierten Abstand zu der Innenfläche des Werkzeugs positioniert. Beispielsweise kann der gebogene Glaskörper mittels Positionierungsstiften in einem definierten Abstand zu der Innenfläche des Werkzeuges gehalten werden. Durch den Abstand ist ein Freiraum oder Spalt zwischen dem Glaskörper und dem Werkzeug gebildet, so dass der Glaskörper nicht unmittelbar an der Innenfläche des Werkzeugs anliegt. In diesen Freiraum kann nun die fließfähige Formmasse, welche vorzugsweise ein Kunststoffmaterial ist, eingebracht, insbesondere eingespritzt, werden, so dass sich die Formmasse in dem Freiraum verteilt und den Freiraum vollständig ausfüllt. Beim Einströmen bzw. Einfließen der Formmasse in den Freiraum lagert sich die Formmasse entlang der Kontur des gebogenen Glaskörpers ab, so dass eine Abformung der Kontur des gebogenen Glaskörpers erfolgen kann. Nach einer vollständigen Füllung des Freiraumes mit Formmasse erfolgt ein Aushärten der Formmasse, um den Formeinleger auszubilden. Das Aushärten kann zum Beispiel thermisch oder aber auch durch UV-Bestrahlung oder durch Feuchtigkeit erfolgen. Beim Einbringen und/oder Aushärten der Formmasse kann zusätzlich ein geringer Druck auf den gebogenen Glaskörper aufgebracht werden, um eine besonders gute und dichte Ausbildung des Formeinlegers zu erreichen. Der Druck wird vorzugsweise gleichmäßig verteilt über die Fläche des gebogenen Glaskörpers bzw. der Formmasse aufgebracht. Hierdurch kann eine besonders hohe Passgenauigkeit bei der Kontur des Formeinlegers an seiner zweiten Seitenfläche an die Kontur des gebogenen Glaskörpers als auch an seiner ersten Seitenfläche an die Innenfläche des Werkzeuges erreicht werden.

Um verhindern zu können, dass sich Lufteinschlüsse zwischen dem gebogenen Glaskörper und der Formmasse und damit dem Formeinleger bilden können, kann es vorgesehen sein, dass das Einbringen und/oder Aushärten der Formmasse unter reduziertem Druck oder Vakuum erfolgt. Die Qualität der Ausbildung des Formeinlegers kann dadurch wesentlich erhöht werden.

Alternativ zu dem Spritzgießen oder Spritzprägens des Formeinlegers kann die Ausbildung des Formeinlegers auch mittels eines Prägeprozesses in Form eines thermischen Umformprozesses erfolgen. Bei einem derartigen thermischen Umformprozess kann auf der Innenfläche des Werkzeugs eine mattenförmige Formmasse angeordnet werden und auf die mattenförmige Formmasse kann der gebogene Glaskörper aufgelegt werden, wobei mittels eines thermischen Prägens die Kontur des gebogenen Glaskörpers in der mattenförmigen Formmasse ausgeformt wird, wodurch der Formeinleger ausgebildet wird. Die mattenförmige Formmasse ist vorzugsweise aus einem Kunststoffmaterial ausgebildet. Durch Aufbringen eines gleichmäßig über die Fläche des gebogenen Glaskörpers verteilten Drucks kann die Kontur des gebogenen Glaskörpers auf der mattenförmigen Formmasse abgeformt werden.

Alternativ zu dem Ausformen des Formeinlegers mittels eines thermischen Umformprozesses kann das Ausformen des Formeinlegers auch mittels eines Gießprozesses erfolgen. Wird der Formeinleger in einem Gießprozess hergestellt, ist der Formeinleger vorzugsweise aus einem Material mit einem hohen Elastizitätsmodul ausgebildet. Beispielsweise kann der Formeinleger aus einem Kunststoffmaterial, aber auch aus einem anderen Material, wie beispielsweise Beton oder Gips, ausgebildet werden. Wird ein Kunststoffmaterial für den Formeinleger verwendet, so kann dies beispielsweise ein Polyurethan, Polyesterharz oder Epoxidharz sein.

Der Gießprozess erfolgt vorzugsweise derart, dass der gebogene Glaskörper in dem Werkzeug beabstandet zu der Innenfläche des Werkzeugs positioniert wird und eine fließfähige Formmasse auf eine der Innenfläche des Werkzeugs abgewandten Oberfläche des gebogenen Glaskörpers gegossen wird, wodurch der Formeinleger ausgebildet wird. Bei dem Gießprozess wird die fließfähige Formmasse damit unmittelbar auf den gebogenen Glaskörper aufgebracht und nicht in einen Freiraum zwischen dem gebogenen Glaskörper und der Innenfläche des Werkzeugs. Auch bei dem Gießprozess wird der gebogene Glaskörper zunächst in dem Werkzeug in einem definierten Abstand zu der Innenfläche des Werkzeugs positioniert. Dies kann dadurch erfolgen, dass der gebogene Glaskörper auf einer Vielzahl von innerhalb des Werkzeugs angeordneten Stützelementen positioniert wird. Die Stützelemente sollten dabei derart dicht zueinander positioniert werden, dass diese das Eigengewicht des Glaskörpers und der auf den Glaskörper aufzubringenden Formmasse ohne eine nennenswerte Durchbiegung des Glaskörpers tragen können. Beim Gießprozess ist der gebogene Glaskörper unterhalb der Formmasse und damit unterhalb des auszubildenden Formeinlegers positioniert. Beim Gießen der Formmasse auf den gebogenen Glaskörper bildet sich an der von dem gebogenen Glaskörper abgewandten Oberseite der Formmasse aufgrund der Gewichtskraft der Formmasse eine plane Fläche aus, welche bei dem Formeinleger die erste, eben ausgebildete Seitenfläche darstellt. Der hierbei ausgebildete Formeinleger kann mehrere Zentimeter, beispielsweise zwischen 0,7 und 9 cm dick sein.

Weitere, die Erfindung verbessernde Maßnahmen werden nachstehend anhand der Beschreibung bevorzugter Ausgestaltungen der Erfindung anhand der nachfolgenden Figuren näher dargestellt.

Es zeigen:
Fig. 1 eine schematische Darstellung eines Ablaufs eines Verfahrens zum Hinterspritzen eines gebogenen Glaskörpers gemäß einer ersten Ausgestaltung der Erfindung;
Fig. 2 eine schematische Darstellung eines Ablaufs eines Verfahrens zum Hinterspritzen eines gebogenen Glaskörpers gemäß einer zweiten Ausgestaltung der Erfindung; und
Fig. 3 eine schematische Darstellung eines Ablaufs eines Verfahrens zum Hinterspritzen eines gebogenen Glaskörpers gemäß einer dritten Ausgestaltung der Erfindung.

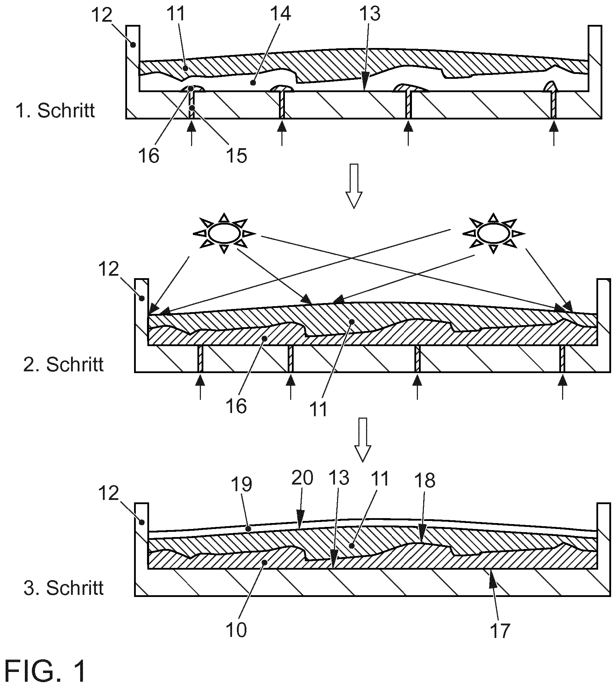

In Fig. 1 ist die Herstellung eines Formeinlegers 10 für das Hinterspritzen eines gebogenen Glaskörpers 11 gezeigt, wobei die Herstellung in Fig. 1 mittels eines thermischen Umformprozesses, insbesondere eines Spritzgieß- bzw. Spritzprägeprozesses, erfolgt.

Hierfür wird in einem Werkzeug 12 zunächst der gebogene Glaskörper 11 positioniert. Das Werkzeug 12 selber ist vorzugsweise aus einem Metallmaterial, insbesondere einem Stahlmaterial, ausgebildet. Die Positionierung des Glaskörpers 11 in dem Werkzeug 12 erfolgt derart, dass der Glaskörper 11 in einem definierten Abstand zu der Innenfläche 13 des Werkzeugs 12 angeordnet ist, so dass ein Freiraum 14 zwischen der Innenfläche 13 des Werkzeugs 12 und dem Glaskörper 11 ausgebildet ist. Der Freiraum 14 erstreckt sich vorzugsweise über die gesamte Länge und Breite des Glaskörpers 11, so dass eine Ausformung des Formeinlegers 10 auch über die gesamte Länge und Breite des Glaskörpers 11 erfolgen kann.

Um den Glaskörper 11 in einem definierten Abstand zu der Innenfläche 13 des Werkzeugs 12 halten zu können, können Positionierungsstifte bzw. Stützelemente verwendet werden, welche sich mit einem ersten freien Ende an der Innenfläche 13 des Werkzeugs 12 und mit einem gegenüberliegenden zweiten freien Ende an der Oberfläche des Glaskörpers 11 abstützen können. Vorzugsweise werden mindestens drei Positionierungsstifte bzw. Stützelemente verwendet, um den Glaskörper 11 beabstandet zu der Innenfläche 13 des Werkzeugs 12 halten zu können.

Der definierte Abstand zwischen dem Glaskörper 11 und der Innenfläche 13 des Werkzeugs 12 beträgt vorzugsweise zwischen 0,7 und 3 mm, bevorzugt zwischen 1 und 2 mm.

Das Werkzeug 12 weist vorzugsweise mehrere Einlassöffnungen 15 auf, über welche eine fließfähige Formmasse 16 in den Freiraum 14 einströmen bzw. einfließen kann, wie im 1. Schritt in Fig. 1 zu erkennen ist. Es wird vorzugsweise eine derart große Menge an fließfähiger Formmasse 16 in den Freiraum 14 eingebracht, dass der Freiraum 14 vollständig mit der Formmasse 16 ausgefüllt wird. Die Position der Einlassöffnungen 15 sind passend zu der Geometrie des Glaskörpers 11 gewählt, so dass Lufteinschlüsse beim Einströmen der Formmasse 16 in den Freiraum 14 vermieden werden können. Die Einlassöffnungen 15 sind vorzugsweise im Bereich der besonders stark gebogenen Bereiche des Glaskörpers 11 positioniert. Lufteinschlüsse können hierdurch besonders wirksam vermieden werden.

Sobald der Freiraum 14 vollständig mit Formmasse 16 gefüllt ist, wird die Formmasse 16 ausgehärtet, wie im 2. Schritt in Fig. 1 gezeigt ist. Das Aushärten kann thermisch erfolgen oder aber auch durch UV-Strahlung oder durch Feuchtigkeit.

Um zu verhindern, dass noch in den Einlassöffnungen 15 befindliches Restmaterial an Formmasse 16 beim Aushärten mit aushärtet und dadurch die Einlassöffnungen 15 verstopfen kann, können die Einlassöffnungen 15 einen Verschluss oder Schließmechanismus, wie beispielsweise Schließventile, aufweisen, um zu verhindern, dass die zum Aushärten erforderliche Strahlung in die Einlassöffnungen 15 eindringen kann.

Als fließfähige Formmasse 16, welche später den Formeinleger 10 ausbildet, wird vorzugsweise ein niedrigviskoses aushärtbares Kunststoffmaterial, wie beispielsweise Polyurethan, Acrylharz, Epoxidharz, oder auch Polyester, verwendet. Das Kunststoffmaterial für die Formmasse 16 bzw. den Formeinleger 10 ist so ausgewählt, dass dieses eine schlechte Haftung zu dem Glaskörper 11 aufweist und sich gleichzeitig unterhalb der maximalen Werkzeugtemperatur von vorzugsweise bis zu 180 °C nicht wesentlich verformt und sich unterhalb der Temperatur, bei der die chemische Vorspannung des Glaskörpers 11 verloren gehen würde (ca. 400 °C), verarbeiten lässt. Ferner sollte die Formmasse vorzugsweise eine geringe Schwindung aufweisen.

Der fertige Formeinleger 10, welcher durch die ausgehärtete Formmasse 16 ausgebildet wird, weist eine erste Seitenfläche 17 und einer der ersten Seitenfläche 17 gegenüberliegende zweite Seitenfläche 18 auf. Die erste Seitenfläche 17 ist eben ausgebildet und kann flächig an der Innenfläche 13 des Werkzeugs 12 anliegen. Die zweite Seitenfläche 18 ist in ihrer Form an die Kontur des gebogenen Glaskörpers 11 angepasst.

Ist der Formeinleger 10 ausgebildet, kann in einem 3. Schritt das Hinterspritzen des gebogenen Glaskörpers 11 erfolgen. Der gebogene Glaskörper 11 liegt dafür auf der zweiten Seitenfläche 18 des Formeinlegers 10 auf, welche an die Kontur des Glaskörpers 11 angepasst ist. Der gebogene Glaskörper 11 kann damit passgenau auf dem Formeinleger 10 aufliegen. Das Hinterspritzen erfolgt durch Aufbringen eines fließfähigen Mediums 19 auf den Glaskörper 11, indem das fließfähige Medium 19 auf eine dem Formeinleger 10 abgewandten Oberfläche 20 des Glaskörpers 11 aufgebracht, insbesondere hinterspritzt wird. Durch das passgenaue Anliegen des Formeinlegers 10 an dem Glaskörper 11, können lokal auf den Glaskörper 11 wirkende Biegebelastungen beim Hinterspritzen vermieden werden, wodurch ein Bruch des Glaskörpers 11 verhindert werden kann.

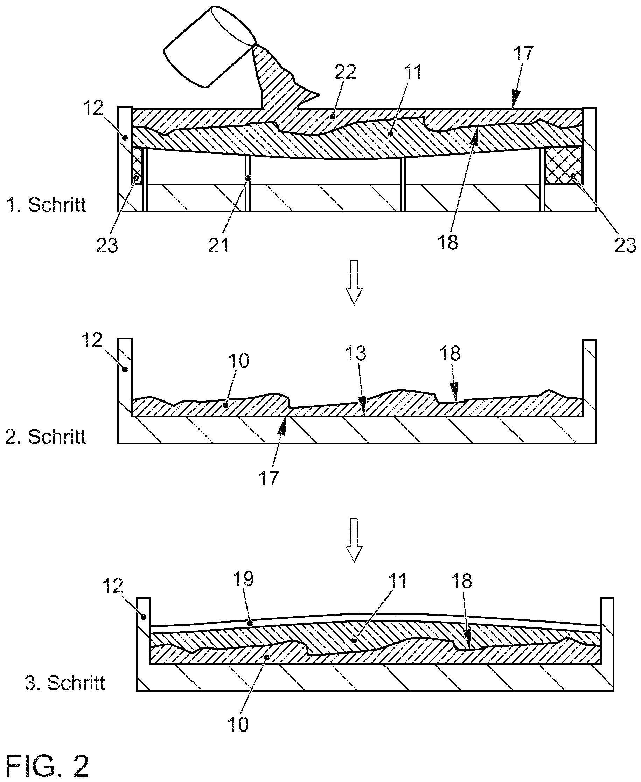

In Fig. 2 ist ein Verfahren zum Hinterspritzen eines gebogenen Glaskörpers 11 gezeigt, bei welchem der Formeinleger 10 durch einen Gießprozess ausgebildet wird.

Der gebogene Glaskörper 11 wird auch hier zunächst in dem Werkzeug 12 beabstandet zu der Innenfläche 13 des Werkzeugs 12 positioniert. Zur Positionierung des Glaskörpers 11 werden eine Vielzahl von Stützelementen 21 verwendet, welche so dicht zueinander angeordnet werden, dass diese das Eigengewicht des Glaskörpers 11 und der zur Ausbildung des Formeinlegers 10 auf den gebogenen Glaskörper 11 aufzugießenden fließfähigen Formmasse 22 tragen können, ohne dass es zu nennenswerten Verformungen kommt. Der gebogene Glaskörper 11 liegt auf den Stützelementen 21 auf. An den Rändern des Glaskörpers 11 ist jeweils ein Abdichtelement 23 angeordnet.

Ist der Glaskörper 11 in dem Werkzeug 12 positioniert, wird die fließfähige Formmasse 22 auf den Glaskörper 11 von oben aufgebracht, wie im 1. Schritt in Fig. 2 zu erkennen ist. Durch das Eigengewicht der Formmasse 22 bildet sich eine erste, eben ausgebildete Seitenfläche 17 und eine zweite, an die Kontur des gebogenen Glaskörpers 11 angepasste Seitenfläche 18 aus.

Vor dem Aufbringen der Formmasse 22 auf den Glaskörper 11 wird dieser mit einer Antihaftbeschichtung versehen.

Die Formmasse 22 und damit der aus der Formmasse 22 sich bildende Formeinleger 10 kann beispielsweise aus einem Kunststoffmaterial, wie Polyurethan, Epoxidharz oder einem Thermoplasten ausgebildet sein. Als Alternative zu einem Kunststoffmaterial kann auch Beton als Formmasse 22 und damit als Formeinleger 10 verwendet werden. Weiter können auch gefüllte Duroplaste, beispielsweise mit Glaskugeln gefüllte Duroplaste, als Formmasse 22 und damit als Formeinleger 10 verwendet werden.

Nach dem Gießen der Formmasse 22 auf den Glaskörper 11 und einem Aushärten der Formmasse 22 ist der Formeinleger 10 ausgebildet. Der Formeinleger 10 wird von dem Glaskörper 11 gelöst und der Glaskörper 11 wird aus dem Werkzeug 12 entfernt.

Anschließend wird, wie im 2. Schritt in Fig. 2 zu erkennen ist, der Formeinleger 10 in dem Werkzeug 12 positioniert, so dass der Formeinleger 10 mit seiner ersten, eben ausgebildeten Seitenfläche 17 flächig auf der Innenseite 13 des Werkzeugs 12 aufliegt. Der gebogene Glaskörper 11 kann dann auf dem Formeinleger 10 positioniert werden, wobei der gebogene Glaskörper 11 passgenau auf der zweiten Seitenfläche 18 des Formeinlegers 10, an welcher die Kontur des Glaskörpers 11 abgeformt worden ist, aufgelegt werden. Anschließend kann der Glaskörper 11 mit einem fließfähigen Medium 19 hinterspritzt werden, wir im 3. Schritt der Fig. 2 zu erkennen ist.

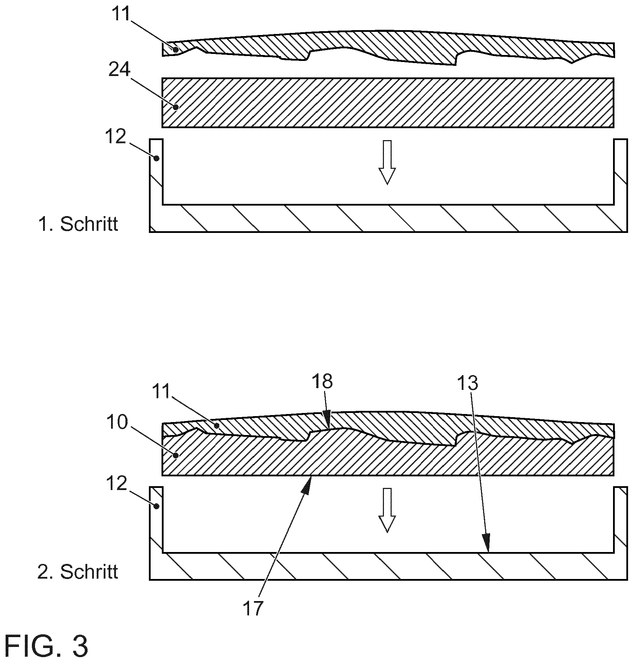

Fig. 3 zeigt ein Verfahren zum Hinterspritzen eines gebogenen Glaskörpers 11, bei welchem der Formeinleger 10 durch Prägen in einem thermischen Umformprozess ausgebildet wird. Hierfür wird in das Werkzeug 12 zunächst eine mattenförmige Formmasse 24 eingelegt, welche später den Formeinleger 10 ausbildet. Anschließend wird der gebogene Glaskörper 11 auf die mattenförmige Formmasse 24 aufgelegt, wie im 1. Schritt in Fig. 3 gezeigt ist. Durch Aufbringen von Druck auf den Glaskörper 11 wird die Kontur des Glaskörpers 11 in die Formmasse 24 durch ein thermisches Prägen übertragen, wodurch der Formeinleger 10 ausgebildet wird, welcher dann eine erste, eben ausgebildete Seitenfläche 17 aufweist, mit welcher der Formeinleger 10 an der Innenfläche 13 des Werkzeugs 12 anliegt, und eine zweite, an die Kontur des Glaskörpers 11 angepasste zweite Seitenfläche 18 aufweist, auf welcher beim Hinterspritzen der Glaskörper 11 aufliegt, wie im 2. Schritt in Fig. 3 zu erkennen ist.

### Bezugszeichenliste

- 10: Formeinleger
- 11: Glaskörper
- 12: Werkzeug
- 13: Innenfläche
- 14: Freiraum
- 15: Einlassöffnung
- 16: Fließfähige Formmasse
- 17: Erste Seitenfläche
- 18: Zweite Seitenfläche
- 19: Fließfähiges Medium
- 20: Oberfläche
- 21: Stützelement
- 22: Fließfähige Formmasse
- 23: Abdichtelement
- 24: Mattenförmige Formmasse

## Patentansprüche

1. Verfahren zum Hinterspritzen eines gebogenen Glaskörpers (11), bei welchem in einem Werkzeug (12) ein Formeinleger (10) mit einer ersten, eben ausgebildeten Seitenfläche (17) und einer gegenüberliegenden zweiten, an eine Kontur des gebogenen Glaskörpers (11) angepassten Seitenfläche (18) derart positioniert wird, dass der Formeinleger (10) mit seiner ersten, eben ausgebildeten Seitenfläche (17) an einer Innenfläche (13) des Werkzeugs (12) anliegt und mit seiner zweiten, an die Kontur des gebogenen Glaskörpers (11) angepassten Seitenfläche (18) frei liegt, wobei der gebogene Glaskörper (11) auf die zweite, an die Kontur des gebogenen Glaskörpers (11) angepasste Seitenfläche (18) aufgelegt wird und der aufgelegte gebogene Glaskörper (11) mit einem fließfähigen Medium (19) hinterspritzt wird, wobei der Formeinleger (10) durch eine Abformung der Kontur des gebogenen Glaskörpers (11) hergestellt wird, **dadurch gekennzeichnet, dass** zur Abformung der Kontur des gebogenen Glaskörpers (11) der gebogene Glaskörper (11) in dem Werkzeug (12) positioniert wird und der Formeinleger (10) anschließend anhand der Kontur des gebogenen Glaskörpers (11) innerhalb des Werkzeuges (12) ausgeformt wird.

2. Verfahren nach Anspruch 1, **dadurch gekennzeichnet, dass** das Ausformen des Formeinlegers (10) mittels eines thermischen Umformprozesses erfolgt.

3. Verfahren nach Anspruch 2, **dadurch gekennzeichnet, dass** bei dem thermischen Umformprozess der gebogene Glaskörper (11) in dem Werkzeug (12) beabstandet zu der Innenfläche (13) des Werkzeuges (12) positioniert wird, so dass ein Freiraum (14) zwischen der Innenfläche (13) des Werkzeugs (12) und des gebogenen Glaskörpers (11) ausgebildet wird, wobei in dem Freiraum (14) eine fließfähige Formmasse (16) eingebracht wird und die in den Freiraum (14) eingebrachte fließfähige Formmasse (16) ausgehärtet wird, wodurch der Formeinleger (10) ausgebildet wird.

4. Verfahren nach Anspruch 3, **dadurch gekennzeichnet, dass** das Einbringen und/oder Aushärten der fließfähigen Formmasse (16) unter Vakuum erfolgt.

5. Verfahren nach Anspruch 2, **dadurch gekennzeichnet, dass** bei dem thermischen Umformprozess auf der Innenfläche (13) des Werkzeugs (12) eine mattenförmige Formmasse (24) angeordnet wird und auf der mattenförmigen Formmasse (24) der gebogene Glaskörper (11) aufgelegt wird, wobei mittels eines thermischen Prägens die Kontur des gebogenen Glaskörpers (11) auf der mattenförmigen Formmasse (24) ausgeformt wird, wodurch der Formeinleger (10) ausgebildet wird.

6. Verfahren nach Anspruch 1, **dadurch gekennzeichnet, dass** das Ausformen des Formeinlegers (10) mittels eines Gießprozesses erfolgt.

7. Verfahren nach Anspruch 6, **dadurch gekennzeichnet, dass** bei dem Gießprozess der gebogene Glaskörper (11) in dem Werkzeug (12) beabstandet zu der Innenfläche (13) des Werkzeuges (12) positioniert wird und eine fließfähige Formmasse (22) auf eine der Innenfläche (13) des Werkzeuges (12) abgewandten Oberfläche des gebogenen Glaskörpers (11) gegossen wird, wodurch der Formeinleger (10) ausgebildet wird.

8. Vorrichtung zum Hinterspritzen eines gebogenen Glaskörpers (11), mit einem Werkzeug (12) und einem Formeinleger (10), welcher in dem Werkzeug (12) positioniert ist, wobei der Formeinleger (10) eine erste, eben ausgebildete Seitenfläche (17) aufweist, mittels welcher der Formeinleger (10) an einer Innenfläche (13) des Werkzeugs (12) anliegt, und wobei der Formeinleger (10) eine der ersten Seitenfläche (17) gegenüberliegende zweite Seitenfläche (18) aufweist, welche an die Kontur des gebogenen Glaskörpers (11) angepasst ist, wobei zum Hinterspritzen des gebogenen Glaskörpers (11) mit einem fließfähigen Medium (19) der gebogene Glaskörper (11) auf die zweite Seitenfläche (18) des Formeinlegers (10) auflegbar ist, wobei der Formeinleger (10) durch eine Abformung der Kontur des gebogenen Glaskörpers (11) hergestellt ist, **dadurch gekennzeichnet, dass** zur Abformung der Kontur des gebogenen Glaskörpers (11) der gebogene Glaskörper (11) in dem Werkzeug (12) positioniert ist und der Formeinleger (10) anhand der Kontur des gebogenen Glaskörpers (11) innerhalb des Werkzeuges (12) ausgeformt ist.

## Claims

1. Method for back-moulding a curved glass body (11), in which a mould insert (10) with a first, flat lateral surface (17) and an opposite second lateral surface (18), which is adapted to a contour of the curved glass body (11), is positioned in a tool (12) such that the mould insert (10) lies with its first, flat lateral surface (17) against an inner surface (13) of the tool (12) and lies with its second lateral surface (18), which is adapted to the contour of the curved glass body (11), exposed, wherein the curved glass body (11) is placed onto the second lateral surface (18), which is adapted to the contour of the curved glass body (11), and the placed-on curved glass body (11) is back-moulded with a flowable medium (19), wherein the mould insert (10) is produced by taking an impression of the contour of the curved glass body (11), **characterized in that**, for taking an impression of the contour of the curved glass body (11), the curved glass body (11) is positioned in the tool (12) and the mould insert (10) is subsequently moulded on the basis of the contour of the curved glass body (11) within the tool (12).

2. Method according to Claim 1, **characterized in that** the moulding of the mould insert (10) is performed by means of a thermoforming process.

3. Method according to Claim 2, **characterized in that**, in the thermoforming process, the curved glass body (11) is positioned in the tool (12) at a distance from the inner surface (13) of the tool (12), so that a clearance (14) is formed between the inner surface (13) of the tool (12) and the curved glass body (11), wherein a flowable moulding compound (16) is introduced into the clearance (14) and the flowable moulding compound (16) introduced into the clearance (14) is cured, whereby the mould insert (10) is formed.

4. Method according to Claim 3, **characterized in that** the introduction and/or curing of the flowable moulding compound (16) takes place under a vacuum.

5. Method according to Claim 2, **characterized in that**, in the thermoforming process, a mat-like moulding compound (24) is arranged on the inner surface (13) of the tool (12) and the curved glass body (11) is placed onto the mat-like moulding compound (24), wherein the contour of the curved glass body (11) is moulded on the mat-like moulding compound (24) by means of a thermal embossing, whereby the mould insert (10) is formed.

6. Method according to Claim 1, **characterized in that** the moulding of the mould insert (10) takes place by means of a casting process.

7. Method according to Claim 6, **characterized in that**, in the casting process, the curved glass body (11) is positioned in the tool (12) at a distance from the inner surface (13) of the tool (12) and a flowable moulding compound (22) is poured onto a surface of the curved glass body (11) that is facing away from the inner surface (13) of the tool (12), whereby the mould insert (10) is formed.

8. Device for back-moulding a curved glass body (11), with a tool (12) and a mould insert (10), which is positioned in the tool (12), wherein the mould insert (10) has a first, flat lateral surface (17), by means of which the mould insert (10) lies against an inner surface (13) of the mould (12), and wherein the mould insert (10) has a second lateral surface (18), which is opposite from the first lateral surface (17) and is adapted to the contour of the curved glass body (11), wherein, for back-moulding the curved glass body (11) with a flowable medium (19), the curved glass body (11) can be placed onto the second lateral surface (18) of the mould insert (10), wherein the mould insert (10) is produced by taking an impression of the contour of the curved glass body (11), **characterized in that**, for taking an impression of the contour of the curved glass body (11), the curved glass body (11) is positioned in the tool (12) and the mould insert (10) is moulded on the basis of the contour of the curved glass body (11) within the tool (12) .

## Revendications

1. Procédé d'aspersion arrière d'un corps en verre incurvé (11), procédé dans lequel un insert de formage (10) pourvu d'une première surface latérale plane (17) et une deuxième surface latérale (18) opposée, adaptée à un contour du corps en verre incurvé (11), est positionné dans un outil (12) de telle sorte que l'insert de formage (10) vienne en appui avec sa première surface latérale plane (17) sur une surface intérieure (13) de l'outil (12) et soit dégagé au niveau de sa deuxième surface latérale (18), adaptée au contour du corps en verre incurvé (11), le corps en verre incurvé (11) étant placé sur la deuxième surface latérale (18), adaptée au contour du corps en verre incurvé (11), et le corps en verre incurvé (11) placé sur celle-ci étant soumis à une aspersion arrière avec un milieu fluide (19), l'insert de formage (10) étant produit par formage du contour du corps en verre incurvé (11), **caractérisé en ce que** le corps en verre incurvé (11) est positionné dans l'outil (12) pour mettre en forme le contour du corps en verre incurvé (11) et l'insert de formage (10) est ensuite façonné sur la base du contour du corps en verre incurvé (11) à l'intérieur de l'outil (12).

2. Procédé selon la revendication 1, **caractérisé en ce que** le formage de l'insert de formage (10) est effectué par un procédé de formage thermique.

3. Procédé selon la revendication 2, **caractérisé en ce que**, pendant le processus de formage thermique, le corps en verre incurvé (11) dans l'outil (12) est positionné à distance de la surface intérieure (13) de l'outil (12) de façon à ménager un espace libre (14) entre la surface intérieure (13) de l'outil (12) et le corps en verre incurvé (11), un composé de formage fluide (16) étant introduit dans l'espace libre (14) et le composé de formage fluide (16) introduit dans l'espace libre (14) étant durci de façon à former l'insert de formage (10).

4. Procédé selon la revendication 3, **caractérisé en ce que** l'introduction et/ou le durcissement du composé de formage fluide (16) sont effectués sous vide.

5. Procédé selon la revendication 2, **caractérisé en ce que**, dans le processus de formage thermique, un composé de formage (24) en forme de mat est disposé sur la surface intérieure (13) de l'outil (12) et le corps en verre incurvé (11) est placé sur le composé de formage (24) en forme de mat, le contour du corps en verre incurvé (11) étant formé sur le composé de formage (24) en forme de mat par gaufrage thermique de façon à former l'insert de formage (10).

6. Procédé selon la revendication 1, **caractérisé en ce que** le formage de l'insert de formage (10) est effectué par un procédé de coulée.

7. Procédé selon la revendication 6, **caractérisé en ce que**, pendant le processus de coulée, le corps en verre incurvé (11) est positionné dans l'outil (12) à distance de la surface intérieure (13) de l'outil (12) et un composé de formage fluide (22) est coulé sur une surface du corps en verre incurvé (11) qui est opposée à la surface intérieure (13) de l'outil (12) de façon à former l'insert de formage (10).

8. Dispositif d'aspersion arrière d'un corps en verre incurvé (11), ledit dispositif comprenant un outil (12) et un insert de formage (10) qui est positionné dans l'outil (12), l'insert de formage (10) comportant une première surface latérale plane (17) au moyen de laquelle l'insert de formage (10) vient en appui sur une surface intérieure (13) de l'outil (12), et l'insert de formage (10) comportant une deuxième surface latérale (18) opposée à la première surface latérale (17) et adaptée au contour du corps en verre incurvé (11), le corps en verre incurvé (11) pouvant être placé sur la deuxième surface latérale (18) de l'insert de formage (10) pour soumettre le corps en verre incurvé (11) à une aspersion en arrière avec un milieu fluide (19), l'insert de formage (10) étant produit par formage du contour du corps en verre incurvé (11), **caractérisé en ce que** le corps en verre incurvé (11) est positionné dans l'outil (12) pour mettre en forme le contour du corps en verre incurvé (11) et l'insert de formage (10) étant mis en forme sur la base du contour du corps en verre incurvé (11) à l'intérieur de l'outil (12).
